# EUROPEAN PATENT APPLICATION

(11) **EP 4 578 729 A1**
(43) Date of publication of application: **02.07.2025**
(21) Application number: 22956209.5
(22) Date of filing: 21.09.2022
(51) Int. Cl.: B60P 7/02

(54) **PICKUP TRUCK CAP AND VEHICLE**

(30) Priority: 26.08.2022 CN 202211035758
(71) Applicant: Anhui Wollin International Co., Ltd., Wuhu, Anhui 241001 (CN)
(72) Inventor: YE, Jinsong, Wuhu, Anhui 241001 (CN); HU, Kai, Wuhu, Anhui 241001 (CN); XU, Han, Wuhu, Anhui 241001 (CN)
(74) Representative: Ran, Handong
(86) International application number: PCT/CN2022/120340
(87) International publication number: WO 2024/040665

(57) **Abstract**

The present invention relates to a pickup truck cap and a vehicle. The pickup truck cap is applied to a cargo bed of a pickup truck. The pickup truck cap comprises: side enclosure plates and a cover plate; the side enclosure plates fit with and are mounted on the cargo bed of the pickup truck; the cover plate is arranged above the side enclosure plates. The cover plate comprises: a front cover plate and a flip cover; the front cover plate is connected to the side enclosure plates; the flip cover can rotate around a shaft located at one end of the front cover plate; the flip cover is connected to the side enclosure plate or the front cover plate, and a telescopic supporting member is mounted at the connection joint; the telescopic supporting member can reciprocate between a first state and a second state; when the telescopic supporting member is in the first state, the flip cover is opened; when the telescopic supporting member is in the second state, the flip cover is closed. According to the present invention, the flip cover having a rotating opening/closing function is additionally arranged on the pickup truck cap, so that the bearing space of the cargo bed of the pickup truck is expanded, and moreover, large cargo, especially tall goods, can be loaded and unloaded; the cargo is prevented from being exposed to the sun and rain, and the safety of article transportation is guaranteed.

## Description

### Field of Technology

The present application relates generally to the field of pickup truck bed cover technology, and in particular, to a pickup truck bed cover and a vehicle.

### Background

A pickup truck is a type of vehicle with a sedan-style front cabin and an open cargo bed. Pickup trucks are favored by many consumers for their beautiful appearance, car-like comfort, strong power, low price and practicality in transporting both people and goods.

The bed of a pickup truck is open, therefore, the items in the bed are vulnerable to exposure to sun and rain and prone to theft. These disadvantages affect the promotion and use of pickup trucks. Currently, there are some bed covers for pickup trucks on the market, some of which are whole flat covers additionally mounted over the entire bed to prevent sun and rain. However, the flat covers cannot extend and retract upward and downward, making loading space of the beds smaller. Others are high covers made from spliced panels, which increase the loading space of the beds and can also prevent sun and rain. However, due to limitation of opening of these bed covers, it is not conducive to the loading and unloading of large goods, especially those that are taller, e.g., refrigerators, wardrobes and the like.

### Brief Summary

An object of the present application is to provide a cover for a pickup truck bed and a vehicle. By adding on the cover a flap cover with a rotary opening or closing function, the loading space of the pickup truck bed is increased, while enabling the loading and unloading of large goods, especially taller goods. The cover also protects the goods from being exposed to the sun and rain, reducing economic losses.

Embodiments of the present application are implemented as follows:

In a first aspect, an embodiment of the present application provides a cover applicable to a pickup truck bed, the cover comprising: a side enclosing plate fitted with the pickup truck bed, and a cover plate disposed above the side enclosing plate, wherein:
the cover plate comprises: a front cover plate connected to the side enclosing plate, and a flap cover that is rotatable around a shaft located at an end of the front cover plate;
the flap cover is connected to the side enclosing plate or the front cover plate at a point where a retractable support is mounted, and the retractable support is capable of reciprocating between a first state and a second state; and
when the retractable support is in the first state, the flap cover is opened; and when the retractable support is in the second state, the flap cover is closed.

In some embodiments, the flap cover comprises a first flap and a second flap connected at an angle to the first flap;
when the flap cover is opened, the first flap is substantially perpendicular to the horizontal plane, and when the flap cover is closed, the first flap is substantially parallel to the horizontal plane.

In some embodiments, the retractable support is a retractable rod and the retractable rod is at least one in number,
wherein one end of the retractable rod is hinged to the first flap, and the other end of the retractable rod is hinged to the side enclosing plate.

In some embodiments, the side enclosing plate comprises a first side plate, a second side plate and a third side plate;
the first side plate and the second side plate are detachably mounted on a side of the pickup truck bed, and the third side plate is detachably mounted on a front side of the pickup truck bed.

In some embodiments, the other end of the retractable rod is hinged to the first side plate and/or the second side plate and/or the rear end of the front cover plate.

In some embodiments, the first side plate, the second side plate, the third side plate, the front cover plate, the flap cover and the pickup truck bed form a first loading space.

In some embodiments, the first side plate is provided with a first expansion slot, the first expansion slot at least partially defines a second loading space, and the second loading space may mount devices or store articles independently of the first loading space.

In some embodiments, the second side plate is provided with a second expansion slot, the second expansion slot at least partially defines a third loading space, the third loading space may mount devices or store articles independently of the first loading space and the second loading space.

In some embodiments, one or more of a secondary fuel tank, a water storage tank, a tool box and a ladder are mounted in the second loading space and/or the third loading space.

In some embodiments, the width of the cover is the same as that of the front of the pickup truck, the cover is at the same height as or higher than the front of the pickup truck when the cover is fixed on the pickup truck bed.

In some embodiments, a sealing element is mounted between the pickup truck bed and the first side plate, the second side plate, and the third side plate.

In some embodiments, the sealing element is an annular sealing ring.

In a second aspect, an embodiment of the present application provides a vehicle having a cover mounted thereon as described in any one of the above embodiments.

Compared with the prior art, the beneficial effects of the embodiments of the present application include:
The present application provides a cover for a pickup truck bed and a vehicle, the cover applied to the pickup truck bed, wherein the cover comprises a side enclosing plate and a cover plate, the side enclosing plate is fitted with the pickup truck bed and the cover plate is disposed above the side enclosing plate. The cover plate comprises a front cover plate and a flap cover, the front cover plate is connected to the side enclosing plate, and the flap cover is rotatable around the shaft located at one end of the front cover plate. It should be noted that the flap cover is connected to the side enclosing plate or the front cover plate, and a retractable support is mounted at their connection, and the retractable support is capable of reciprocating between a first state and a second state. It should be noted that, when the retractable support is in the first state, the flap cover is opened; when the retractable support is in the second state, the flap cover is closed. By adding on the pickup truck cover a flap cover with a rotary opening or closing function, the present application increases loading space of the pickup truck bed. It also allows large goods, especially taller goods, to be loaded and unloaded, protects the goods from the sun and rain, and ensures safe transportation, which reduces economic losses.

The loading space of the pickup truck bed is increased by additionally mounting a retractable cover on the pickup truck bed, and the capability of the pickup truck bed to load and unload large goods (longitudinally higher goods) is further improved.

In order to understand the technical means of the present application more clearly and implement the present application according to the contents of the description, and in order to make the above and other objects, features and advantages of the present application clearer and more comprehensible, the following preferred embodiments are described below in detail with reference to the accompanying drawings. Other features and advantages of the present application will be set forth in the description which follows, and in part will be obvious from the description or be reflected by practice of the present application. The object and other advantages of the present application may be achieved and obtained by the structure specifically outlined in the specification, claims and drawings.

### Brief Description of the Drawings

In order to illustrate the technical solution in the present application more clearly, the following will be a brief description of the drawings used in the embodiments. Apparently, the drawings described below are only some embodiments of the present application. For an ordinary person skilled in the art, other drawings may also be obtained according to these drawings without making an inventive step.
FIG. 1 illustrates a schematic view of a cover mounted on a pickup truck bed of the present application;
FIG. 2 illustrates a schematic view of a flap cover of the cover in a closed state of the present application;
FIG. 3 illustrates a schematic view of the flap cover of the cover in an open state of the present application;
FIG. 4 illustrates an exploded view of the cover of the present application;
FIG. 5 illustrates a schematic view of a retractable cover mounted on a pickup truck bed in a retracted position according to the present application;
FIG. 6 illustrates a schematic view of a retractable cover mounted on a pickup truck bed in an extended position according to the present application;
FIG. 7 illustrates a schematic view of a first cover plate in a flipped position when the retractable cover is retracting;
FIG. 8 illustrates a schematic view the first cover plate and a second cover plate in a flattened position when the retractable cover is retracting;
FIG. 9 illustrates a schematic view of the first cover plate and the second cover plate in the flattened position when the retractable cover is extended.

Reference numerals:
100 cover;
101 side enclosing plate; 102 cover plate; 103 front cover plate; 104 flap cover; 105 middle beam; 106 first flap; 107 second flap; 108 retractable rod; 109 first side plate; 110 second side plate; 111 third side plate; 112 first expansion slot; 113 second expansion slot; 114 secondary fuel tank; 115 water storage tank; 116 tool box; 117 ladder; 118 sealing ring;
200 retractable cover;
201 flap cover plate assembly; 202 retraction assembly; 203 bracket; 204 first cover plate; 205 second cover plate; 206 first crossbeam; 207 second crossbeam; 208 scissor retractable rod.

### Detailed Description

To make the object, technical solution and advantages of the embodiments of the present application clearer, the following clearly and completely describes the technical solution of the embodiments of the present application. Obviously, the described embodiments are part of the embodiments of the present application, not all of the embodiments. Components of the embodiments of the present application generally described and illustrated in the drawings herein may be arranged and designed in a variety of different configurations.

Accordingly, the following detailed description of the embodiments of the present application provided in the drawings is not intended to limit the scope of the present application claimed, but merely represents selected embodiments of the present application. Based on the embodiments of the present application, any other embodiments obtained by an ordinary person skilled in the art without making an inventive step are within the scope of the present application.

To make the object, features and advantages of the present application clearer and more comprehensible, the following describes specific implementations of the present application in detail with reference to the accompanying drawings. In the detailed description of the embodiments of the present application, for ease of illustration, the schematic views may be partially enlarged disproportionately, and the schematic views are only examples, which should not limit the scope of the present application. In addition, three-dimensional spatial dimensions, including length, width and depth, should be included in actual production.

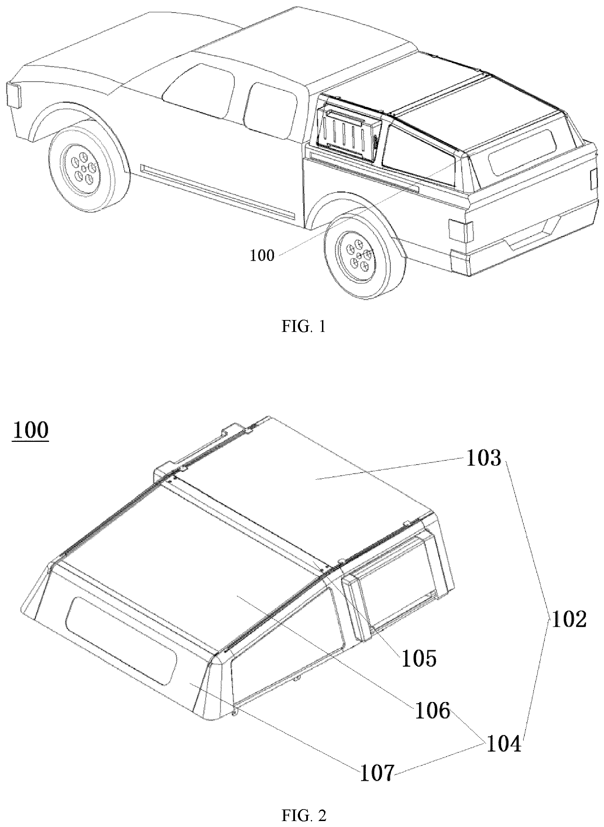

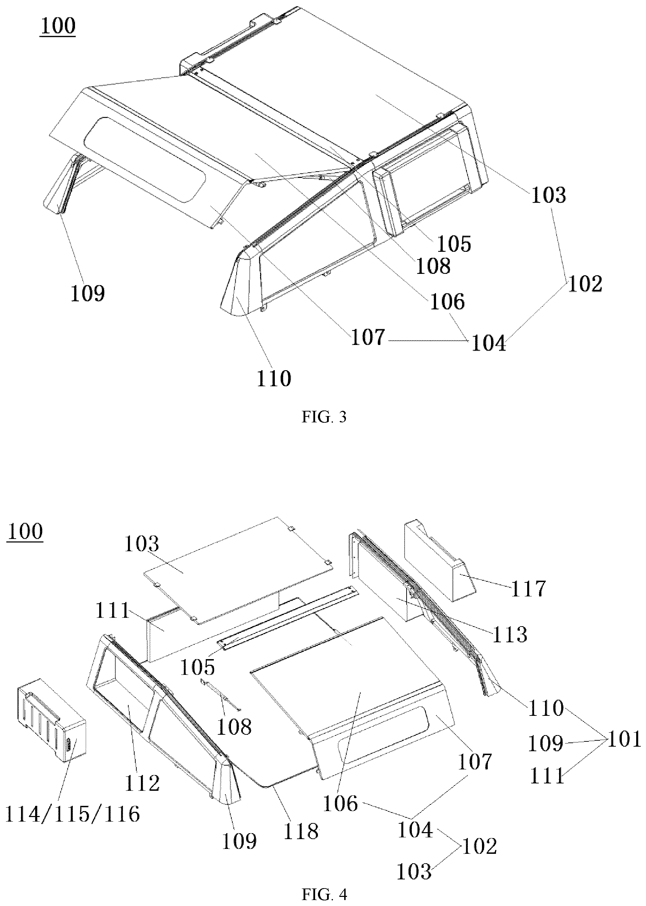

In an embodiment of the present application, referring to FIGs. 1-4, a cover for a pickup truck is provided. The cover 100 is applicable to a pickup truck bed, wherein the cover 100 comprises a side enclosing plate 101 and a cover plate 102. The side enclosing plate 101 is fitted with the pickup truck bed, and the cover plate 102 is disposed above the side enclosing plate 101, specifically, the cover plate 102 covers the side enclosing plate 101. The cover plate 102 comprises a front cover plate 103 and a flap cover 104. A middle beam 105 is connected between the front cover plate 103 and the flap cover 104. The front cover plate 103 connects to the side enclosing plate 101, and the flap cover 104 is rotatable around a shaft located at an end of the front cover plate 103. It should be noted that, the flap cover 104 is connected to the side enclosing plate 101 or the front cover plate 103, and a retractable support is mounted at their connection. The retractable support is capable of reciprocating between a first state and a second state. It should be noted that, when the retractable support is in the first state, the flap cover 104 is opened; when the retractable support is in the second state, the flap cover 104 is closed. The loading space of the pickup truck bed is increased by adding on the cover 100 a flap cover 104 with a rotary opening or closing function. Additionally, large goods, particularly taller items, can be loaded and unloaded, the goods are prevented from being exposed to the sun and rain, and the safety of goods transportation is guaranteed which reduces economic losses.

In a preferred embodiment of the present application, the flap cover 104 comprises a first flap 106 and a second flap 107. It should be appreciated that the first flap 106 and the second flap 107 may be designed using a single injection molding process, or may be as a spliced or cohesive design. It should be noted that, the first flap 106 and the second flap 107 are always connected at an angle, and the range of the angle may be greater than 90 degrees and less than 180 degrees, with an preferred range from 100 to 160 degrees. The range of the angle may be adapted specifically according the overall design of the cover 100. The purpose of designing the first flap 106 and the second flap 107 to be connected at a certain angle is to achieve a better contact between the first flap 106/the second flap 107 and the side enclosing plate 101 of the cover 100, thereby improving the overall sealability and preventing rain or other debris from entering the pickup truck bed and causing damage or pollution to the goods. It should be appreciated that, when the flap cover 104 is open, the first flap 106 is substantially perpendicular to the horizontal plane, or the flap cover 104 may continue to flip and overlap with the front cover plate 103, so as to further increase loading space, thereby making it easier to load and unload longitudinally higher goods or goods with larger cross-sectional area. When the flap cover 104 is closed, the first flap 106 is substantially parallel to the horizontal plane and may be in full contact with the side enclosing plate 101, thereby ensuring the sealability of the pickup truck bed.

Further, a window is provided on the second flap 107, and the window can be opened for ventilation, offering greater versatility and practicality for carrying a wider selection of goods in the pickup truck bed. For example, this allows items requiring sunlight or ventilation such as flowers, fruits and vegetables, potted plants, etc to be safely transported with good quality. Even when such items requiring sunlight or ventilation are not loaded, opening the window allows light into the pickup truck bed, brightening the interior. A lock (not shown in the drawing) is installed on the second flap 107. When there is no need to open the flap cover 104, it may be locked, and when some valuable articles are loaded and unloaded, it can further ensure safety of the articles.

In another embodiment of the present application, the retractable support may be a retractable rod 108 but is not limited to a retractable rod 108. Any component that can support the flap cover 104 or rotate the first flap along an axis at one end of the front cover plate 103 is within the scope of the present application. It should be appreciated that, the retractable rod 108 is at least one, however, it is preferable to have two retractable rods 108. A first end of each rod is hinged to the first flap 106 and a second end of each rod is hinged to the side enclosing plate 101. It should be noted that the purpose of providing two retractable rods 108 is to better support the flap cover 104 and to make the flap cover 104 more stable during its flipping motion, thereby preventing the flap cover 104 from inclining to one side when flipping. Further, the side enclosing plate 101 comprises a first side plate 109, a second side plate 110 and a third side plate 111. The first side plate 109 and the second side plate 110 are of a polygonal plate structure, the side plate close to the front of the pickup truck is flush with the front of the pickup truck, and the side plates farther from the front of the pickup truck gradually taper downward than that close to the front of the pickup truck. As the side enclosing plate 101 is mounted on the pickup truck bed, this design improves the streamlined appearance of the entire pickup truck and its overall aesthetic, thereby enhancing consumer's purchasing desire.

It should be noted that, the first side plate 109 and the second side plate 110 are also provided with windows that can be opened or closed, and the function of windows is the same as that of the window provided on the second flap 107 described above and will not be repeated herein. The third side plate 111 is a rectangular plate, which is horizontally mounted between the first side plate 109 and the second side plate 110 and fixed close to the front end of the pickup truck bed. It should be appreciated that, the first side plate 109 and the second side plate 110 are detachably mounted on a side of the pickup truck bed, and the third side plate 111 is detachably mounted on a front side of the pickup truck bed. In the event that one of the side enclosing plates 101 is damaged, such detachable connection enables it to be disassembled and replaced separately, thereby avoiding the complexity of replacing the entire cover 100 and reducing the costs. The detachable connection may be one or more of bolt connection, snap connection and hinge connection. Specifically, the second end of each retractable rod 108 is hinged to the first side plate 109 and/or the second side plate 110 and/or the rear end of the front cover plate 103, to facilitate the rotary opening of the flap cover 104.

In another embodiment of the present application, the first side plate 109, the second side plate 110, the third side plate 111, the front cover plate 103, the flap cover 104 and the pickup truck bed form a first loading space, which is used for loading goods. The first side plate 109 is provided with a first expansion slot 112, the first expansion slot 112 at least partially defines a second loading space, and the second loading space may mount devices or store articles independently of the first loading space. The second side plate 110 is provided with a second expansion slot 113, the second expansion slot 113 at least partially defines a third loading space, and the third loading space may mount devices or store articles independently of the first loading space and the second loading space. Specifically, the second loading space and the third loading space are designed with a flat groove structure on the bottom surface, so that the mounted devices or stored articles remain more stable. Further, one or more of a secondary fuel tank 114, a water storage tank 115, a tool box 116 and a ladder 117 are mounted in the second loading space and/or the third loading space, but not limited to the articles above, and other devices or articles may be mounted as well and will not be repeated herein.

In another embodiment of the present application, a sealing element is mounted between the first side plate 109/the second side plate 110/the third side plate 111 and the pickup truck bed. The sealing element is an annular sealing ring 118. The use of a ring-shaped structure ensures a better fit between the sealing element 118 and the pickup truck bed. The first side plate 109, the second side plate 110, the third side plate 111, and the second flap 107 are more tightly in contact with the sealing ring 118, increasing the sealability of the pickup truck bed. This provides benefits such as vibration buffering, water proofing and dust proofing, preventing rain water, fine particles and contaminants from entering the bed and damaging the articles in the bed, and ensuring the safety of article transportation.

It should be noted that, the width of the cover 100 of the present application is the same as that of the front of the pickup truck, thereby avoiding that the cover 100 is jammed when the pickup truck passes through a limit pier. The cover 100 is at the same height as or higher than the front of the pickup truck when the cover 100 is fixed on the pickup truck bed. As the cover 100 is at the same height as the front of the pickup truck, a luggage rack can be mounted on the roof of the truck, and the cover can also be used for loading goods, thereby further improving the practicality.

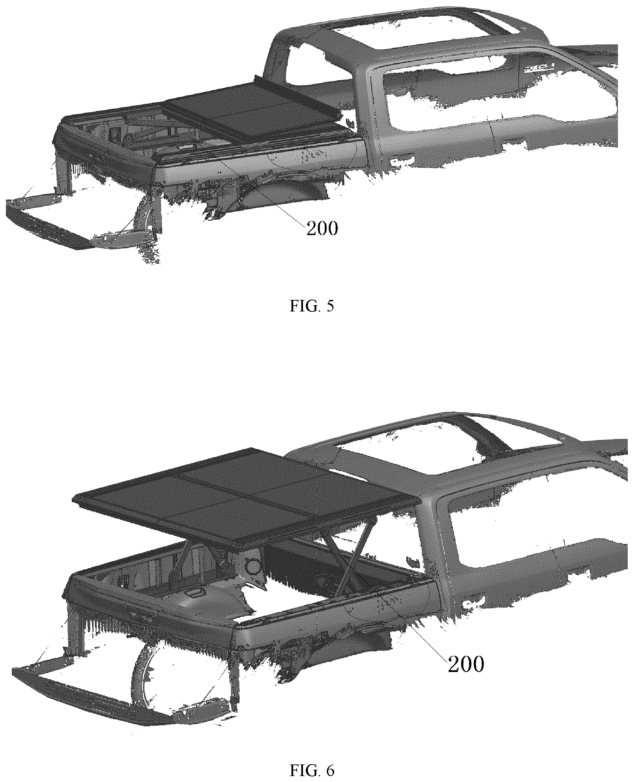

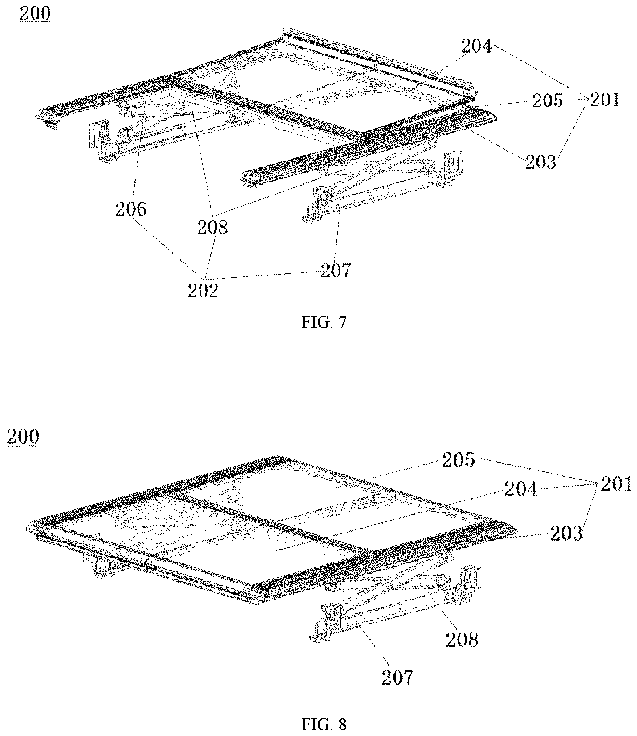

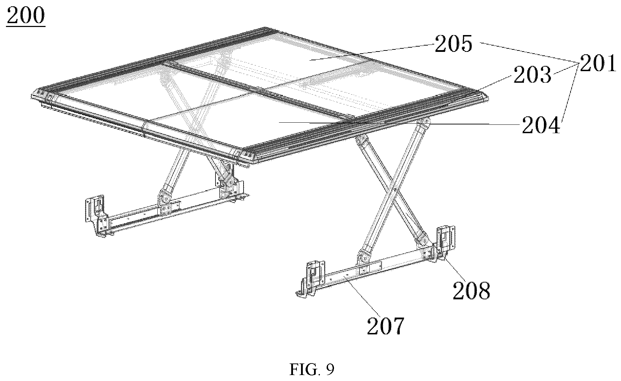

In another embodiment of the present application, referring to FIGs. 5-9, a retractable cover is provided, which is applicable to a pickup truck bed. The retractable cover 200 comprises a flap cover plate assembly 201 and a retraction assembly 202, wherein the flap cover plate assembly 201 comprises a bracket 203, and a first cover plate 204 and a second cover plate 205 which are fixedly connected or movably connected to the bracket 203, the first cover plate 204 and the second cover plate 205 covering the pickup truck bed. It should be noted that, the cover plate movably connected to the bracket 203 may flip 180 degrees around a shaft or an additionally mounted hinge at one end of the cover plate fixedly connected to the bracket 203 and overlap with another cover plate fixed on the bracket. The opening for loading and unloading the goods can be enlarged to facilitate convenient transportation of longitudinally higher goods. The retraction assembly 202 comprises a first crossbeam 206, a second crossbeam 207, and a scissor retractable rod 208 connected between the first crossbeam 206 and the second crossbeam 207. The first crossbeam 206 is detachably connected to the middle of the bracket 203, and the second crossbeam 207 is detachably connected to two ends of the pickup truck bed. The function of the detachable connection is the same as that described in the above embodiments and will not be repeated herein. When the scissor retractable rod 208 is in a first state (retracted), the first cover plate 204 and the second cover plate 205 both cover the pickup truck bed. Alternatively, the first cover plate 204 covers the pickup truck bed and the second cover plate 205 may be flipped open and overlap with the first cover plate 204, or the second cover plate 205 covers the pickup truck bed and the first cover plate 204 may be flipped open and overlap with the second cover plate 205. When the scissor retractable rod 208 is in a second state (extended), the first cover plate 204 and the second cover plate 205 are separated from the pickup truck bed under the action of the scissor retractable rod 208 (extending in the direction of the vehicle's height), and they can extend to the same height as the front of the pickup truck or extend higher than the front of the pickup truck. The retractable cover 200 provided in the embodiment has the same effects as those described in the above embodiments. By adding the retractable cover 200 on the pickup truck bed, the loading space of the pickup truck bed is increased and the capability of the pickup truck bed to load and unload large goods (longitudinally higher goods) is further improved.

In another embodiment of the present application, a vehicle is provided, and the vehicle has the cover 100 mounted thereon as described in any one of the above embodiments.

A method of installing a cover on a vehicle is provided in the present application The method for installing a cover 100 comprises: first laying an annular sealing ring 118 uniformly on the upper end of a pickup truck bed; then assembling a first side plate 109, a second side plate 110 and a third side plate 111 and mounting them as a whole on the pickup truck bed, ensuring contact with the sealing ring 118; and finally having a front cover plate 103, a middle beam 105 and a flap cover 104 successively covering the first side plate 109, the second side plate 110 and the third side plate 111, to fix them in place and to form a first loading space.

The method for installing a retractable cover 200 comprises: first fixing a second cover plate 205 to a bracket 203, then flippably connecting a first cover plate 204 to the second cover plate 205 via a hinge, next connecting the bracket 203 to a first crossbeam 206, and finally connecting a second crossbeam 207 to two ends of the pickup truck bed.

The advantageous effects of the cover and the vehicle provided in the present application include: First, by additionally mounting on the cover 100 a flap cover 104 with a rotary opening or closing function, loading space of the pickup truck bed is increased, and at the same time, large goods, especially those longitudinally higher, can be loaded and unloaded. The cover protects the goods from the sun and rain, ensures the safety of goods transportation and reduces economic losses. Second, by additionally mounting a retractable cover 200 on the pickup truck bed, the loading space of the pickup truck bed is increased and the capability of the pickup truck bed to load and unload large goods (longitudinally higher goods) is improved.

It should be noted that similar numerals and letters represent similar terms in the drawings below, and thus, once an item is defined in one of the drawings, it does not need to be further defined and interpreted in subsequent drawings.

In the description of the present application, it should be noted that the orientation or position relations indicated by the terms 'central', 'upper', 'lower', 'left', 'right', 'vertical', 'horizontal', 'inner', 'outer', etc. are based on the orientations or position relations shown in the drawings; or the customary orientations or position relations when the product of the present application is in use. These terms are used for the convenience of describing the present application and simplifying the description, rather than indicating or implying that a device or element referred to must have a particular orientation, be constructed and operated in a particular orientation, therefore it cannot be understood that the present application is limited thereto. In addition, the terms 'first', 'second', 'third', and the like are used only for distinguishing descriptions, and cannot be understood as indicating or implying relative importance.

Furthermore, the terms 'horizontal', 'vertical' etc. do not imply that the parts must be perfectly horizontal or vertical, but rather may be slightly inclined. For example, 'horizontal' merely means that the direction is more horizontal relative to 'vertical', and does not mean that the structure must be perfectly horizontal, but can be slightly inclined.

In the description of the present application, it should also be noted that, unless specified or limited otherwise, the terms 'disposition', 'installation', 'linkage' and 'connection' should be understood broadly. These could refer to fixed connection, detachable connection, or integral connection; they may also be mechanical or electrical connection; may also be direct connection or indirect connection via intermediary, and may also be inner connectivity of two elements. The specific meanings of the above terms in the present application can be understood by an ordinary person skilled in the art according to specific situations.

Finally, it should be noted that the above description is only of the preferred embodiments of the present application, and is not intended to limit the present application. For an ordinary person skilled in the art, the present application may have various modifications and variations. Any modifications, equivalent substitutions, improvements and the like made within the spirit and principle of the present application belong to the scope of the claims of the present application as filed.

## Claims

1. A cover for a pickup truck, adapted to apply to a pickup truck bed, the cover comprising a side enclosing plate fitted with the pickup truck bed, and a cover plate disposed above the side enclosing plate, wherein:
the cover plate comprises a front cover plate connected to the side enclosing plate and a flap cover that is rotatable around an axis located at an end of the front cover plate;
the flap cover is connected to the side enclosing plate or the front cover plate at a point where a retractable support is mounted, and the retractable support is capable of reciprocating between a first state and a second state;
when the retractable support is in the first state, the flap cover is opened; and
when the retractable support is in the second state, the flap cover is closed.

2. The cover of claim 1, wherein:
the flap cover comprises a first flap and a second flap connected at an angle to the first flap;
when the flap cover is opened, the first flap is substantially perpendicular to the horizontal plane, and when the flap cover is closed, the first flap is substantially parallel to the horizontal plane.

3. The cover of claim 2, wherein:
the retractable support is a retractable rod and the retractable rod is at least one in number; and
one end of the retractable rod is hinged to the first flap, and the other end of the retractable rod is hinged to the side enclosing plate.

4. The cover of claim 3, wherein:
the side enclosing plate comprises a first side plate, a second side plate and a third side plate;
the first side plate and the second side plate are detachably mounted on a side of the pickup truck bed, and the third side plate is detachably mounted on a front side of the pickup truck bed.

5. The cover of claim 4, wherein the other end of the retractable rod is hinged to the first side plate and/or the second side plate and/or the rear end of the front cover plate.

6. The cover of claim 4 or 5, wherein the first side plate, the second side plate, the third side plate, the front cover plate, the flap cover and the pickup truck bed form a first loading space.

7. The cover of claim 6, wherein the first side plate is provided with a first expansion slot, the first expansion slot at least partially defining a second loading space configured to mount devices or store articles independently of the first loading space.

8. The cover of claim 7, wherein the second side plate is provided with a second expansion slot, the second expansion slot at least partially defining a third loading space configured to mount devices or store articles independently of the first loading space and the second loading space.

9. The cover of claim 7 or 8, wherein one or more of a secondary fuel tank, a water storage tank, a tool box and a ladder are mounted in the second loading space and/or the third loading space.

10. The cover of claim 1, wherein a width of the cover is the same as a width of the front of the pickup truck, and the cover is at the same height as or higher than the front of the pickup truck when the cover is fixed on the pickup truck bed.

11. The cover of claim 4 or 5, wherein a sealing element is mounted between the pickup truck bed and the first side plate, the second side plate, and the third side plate.

12. The cover of claim 11, wherein the sealing element is an annular sealing ring.

13. A vehicle, having a cover as claimed in any one of claims 1-12 mounted thereon.
